# FASCICULE DE BREVET EUROPEEN

(11) **EP 3 803 063 B1**
(45) Date de publication et mention de la délivrance du brevet: **21.12.2022**
(21) Numéro de dépôt: 19737819.3
(22) Date de dépôt: 24.05.2019
(51) Int. Cl.: F01D 25/24, B64D 33/04, F02K 1/82, F02C 7/18, B64C 7/02

(54) **AGENCEMENT DE CONDUIT COMPRENANT UNE EMBOUCHURE D'UN CONDUIT DE GAZ CHAUD DE MOTEUR D'AERONEF A TRAVERS UNE PAROI DU MOTEUR**
ROHRANORDNUNG MIT EINEM DURCH EINE TRIEBWERKSWAND PASSIERENDEN AUSLASS EINES FLUGZEUGTRIEBWERKSHEISSGASROHRS
PIPE ASSEMBLY COMPRISING AN OUTLET OF A HOT-GAS PIPE OF AN AIRCRAFT ENGINE PASSING THROUGH AN ENGINE WALL

(30) Priorité: 30.05.2018 FR 1854624
(43) Date de publication de la demande: 14.04.2021
(73) Titulaire: SAFRAN AIRCRAFT ENGINES, 75015 Paris (FR)
(72) Inventeur: FERRIER, Romain, Jean-Claude, 77550 MOISSY-CRAMAYEL (FR); CHALAUD, Sébastien, Christophe, 77550 MOISSY-CRAMAYEL (FR); CHANEZ, Philippe, Gérard, 77550 MOISSY-CRAMAYEL (FR); DAVIS, Lauren, 77550 MOISSY-CRAMAYEL (FR); VERDIER, Bastien, Pierre, 77550 MOISSY-CRAMAYEL (FR); VESSOT, Christian, Sylvain, 77550 MOISSY-CRAMAYEL (FR)
(74) Mandataire: Brevalex
(86) Numéro de dépôt international: PCT/FR2019/051199
(87) Numéro de publication internationale: WO 2019/229337

(56) Documents cités:
- EP-A1- 0 536 089
- US-A1- 2001 003 897
- US-A1- 2007 289 309
- US-A1- 2017 233 091

## Description

L'invention présente a trait à un agencement comprenant notamment une embouchure d'un conduit de gaz chaud de moteur d'aéronef à travers une paroi de ce moteur.

Des conduits de gaz chaud de moteur d'aéronef, pour lesquels l'invention peut être employée, appartiennent à des circuits d'échange de chaleur soutirant du gaz frais (généralement de l'air) d'une région relativement fraîche de l'aéronef, comme la veine secondaire quand elle existe ou les compresseurs de la veine principale, avant de lui faire subir un échauffement dans un échangeur de chaleur avec une portion plus chaude du moteur qu'il convient de rafraîchir, et qui peut être aussi un fluide (huile de lubrification ou gaz par exemple). Le gaz devenu chaud est ensuite rejeté dans un milieu extérieur par une ouverture traversant une paroi de l'aéronef, comme un capot externe de nacelle ou un carter externe ou interne de stator.

Il arrive que le gaz chaud soit rejeté à une température supérieure à celle qui peut être tolérée sans dommage par le matériau de la paroi, que le gaz chaud lèche avant d'être dispersés et qui subit donc des dégradations aux alentours de l'embouchure par laquelle le conduit de gaz finit en la traversant.

Des exemples d'une telle embouchure, éventuellement soumise à cette difficulté, peuvent être trouvés dans les documents FR 3 015 569-A, US 2007/0289309-A1, US 2001/0003897-A1, US 2017/0233091-A1 et EP 0536089-A1.

L'invention a été conçue afin d'obvier à ce risque d'endommagement, et elle repose sur l'idée d'imposer un décollement précoce du gaz chaud, afin de le maintenir à l'écart de la paroi à proximité de l'embouchure. On exploite l'écoulement d'un gaz plus frais qui circule normalement sur la face externe de la paroi pendant le fonctionnement du moteur en maintenant une couche protectrice du gaz frais. Le gaz chaud subit un mélange rapide avec le gaz frais sans pouvoir séjourner sur la paroi, et devient ensuite inoffensif.

Une définition générale de l'invention est un agencement d'un conduit de gaz chaud de moteur d'aéronef, le conduit s'étendant sous une face dite interne d'une paroi du moteur, opposée à une face dite externe de la paroi, le conduit comprenant une embouchure qui lui est raccordée, l'embouchure consistant en une pluralité d'ouvertures oblongues et distinctes traversant la paroi, ayant une direction d'allongement principal (X) coïncidant sensiblement avec une direction d'un écoulement de gaz frais sur la face externe pendant un fonctionnement ordinaire du moteur, les ouvertures se succédant dans une direction transversale (T) de la paroi qui est perpendiculaire à la direction d'allongement principal (X) ; agencement original en ce que les ouvertures sont munies de becs s'évasant dans la direction transversale, et s'étendant au-delà d'une extrémité des ouvertures dans ledit sens aval.

Dans la description qui suit, on appelle par convention face externe de la paroi la face devant laquelle le gaz chaud est éjecté, et face interne la face opposée de la paroi, devant laquelle le conduit du gaz chaud s'étend. Dans la plupart des situations, la face externe correspondra à une face radialement externe du moteur, et le gaz frais environnant pourra être l'atmosphère extérieure. Cependant il est également possible que la face externe corresponde à la face interne de la veine secondaire d'un moteur à double flux, et le gaz frais sera alors le flux secondaire circulant dans cette veine. De plus, la direction d'allongement principal coïncide souvent avec la direction longitudinale ou axiale du moteur, et la direction transversale à sa direction angulaire. Cette situation courante n'est toutefois pas nécessaire à la bonne application de l'invention. Le fonctionnement dit ordinaire du moteur correspond à celui qui propulse l'aéronef.

En séparant l'embouchure en plusieurs ouvertures, on permet à des filets du gaz frais de s'écouler de façon tangente à la face externe de la paroi entre les filets de gaz chaud éjectés, en maintenant donc un écoulement partiel du gaz frais devant l'embouchure, qui réduit ou empêche les retours du gaz chaud contre la face externe de la paroi, et donc l'échauffement de celle-ci. Et les becs favorisent la dispersion des filets de gaz chaud immédiatement en aval de l'ouverture, et leur mélange rapide avec les filets intermédiaires de gaz frais. La protection de la paroi contre les échauffements en est renforcée.

Ces effets sont accentués si, selon une amélioration possible, les ouvertures sont entourées et délimitées par des murets établis sur la face externe (dans la direction radiale) de la paroi et s'élevant au-dessus de la face externe : le gaz chaud est éjecté à distance de la face externe, ce qui permet au gaz frais de maintenir une couche de protection d'épaisseur suffisante. Les becs sont alors placés aux bords libres des murets.

Selon certaines améliorations possibles, les murets peuvent avoir des bords supérieurs inclinés dans la direction d'allongement principal ; et les murets peuvent s'évaser dans la direction transversale vers le bord supérieur.

Il est vrai que la saillie due aux murets accroît la traînée de l'écoulement sur la paroi. Cet inconvénient peut être réduit en façonnant la face externe de la paroi en dépression incurvée autour des ouvertures, afin que les murets soient complètement ou partiellement enfoncés au-dessous de la portion générale de la face externe.

Selon un autre genre de perfectionnement, ils peuvent avoir des hauteurs différentes au-dessus de la face externe pour chacune des ouvertures.

D'après d'autres caractéristiques pouvant aussi améliorer la conception de base, les ouvertures peuvent s'amincir progressivement le long de la direction longitudinale dans le sens de l'écoulement, et les murets s'évaser dans la direction transversale le long de la direction radiale.

On peut préconiser que les ouvertures soient séparées par des distances plus grandes que leurs largeurs dans la direction transversale.

Enfin, une plus grande régularité de l'écoulement est obtenue si le conduit se divise en branches distinctes se raccordant respectivement aux ouvertures avant d'atteindre l'embouchure.

Les divers aspects, caractéristiques et avantages de l'invention seront maintenant décrits plus en détail au moyen des figures suivantes, qui en illustrent certains modes de réalisation possible, non exclusifs d'autres :
- la figure 1 est un schéma des alentours de l'invention ;
- la figure 2 illustre l'extrémité du conduit d'échange de chaleur;
- la figure 3 représente plus particulièrement l'embouchure ;
- la figure 4 illustre précisément les becs caractéristiques de l'invention ;
- et les figures 5, 6, 7, 8, 9, 10 et 11, certaines variantes de réalisation de l'invention.

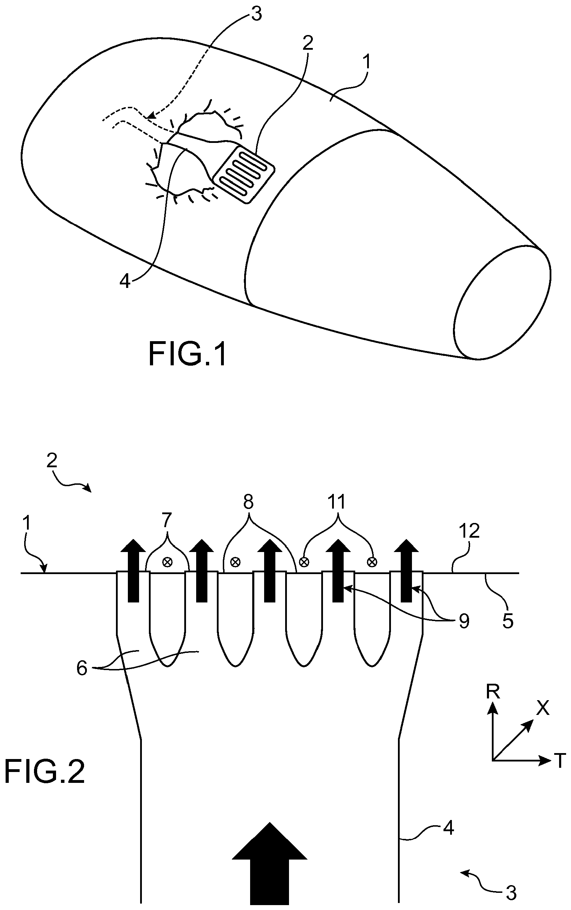

La figure 1 représente schématiquement un capot de nacelle enveloppant un moteur d'aéronef, dont la paroi 1 est munie d'une embouchure 2 par laquelle un circuit d'échange de chaleur 3 situé sous la paroi 1 débouche à l'extérieur d'elle, et éjecte un jet de gaz soutiré auparavant d'une autre partie du moteur et ayant participé à un échange de chaleur. On rappelle que l'invention n'est pas limitée à un emploi sur un capot de nacelle, mais qu'elle peut concerner aussi d'autres capots, comme ceux de carters externes ou internes de stators. De même, le circuit d'échange de chaleur 3 peut provenir de divers endroits du moteur, son trajet n'est pas non plus imposé et l'échange de chaleur permet de refroidir un autre fluide qui est également indifférent.

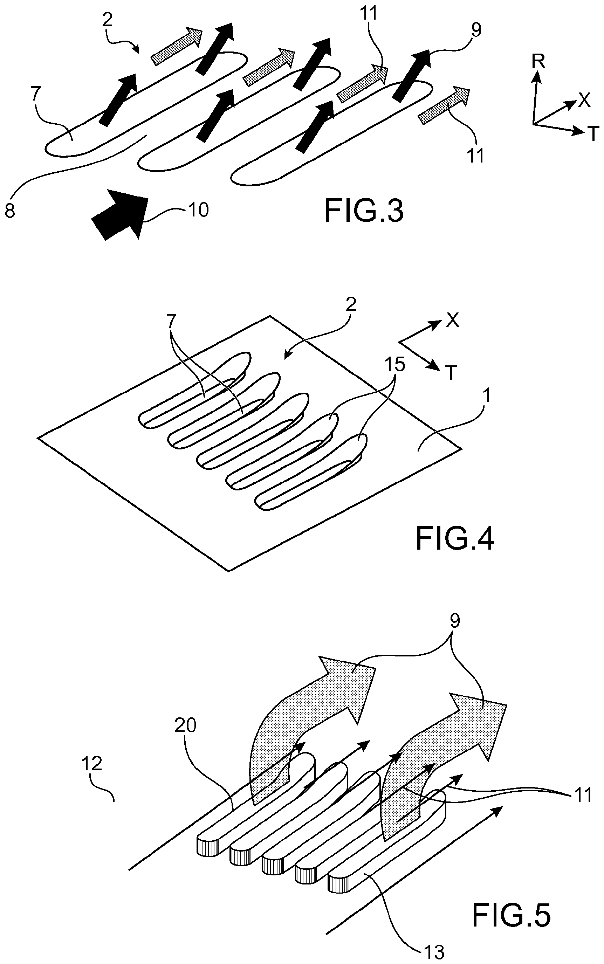

On se rapporte à la figure 2. Le circuit d'échange de chaleur 3 comporte à son extrémité aval un conduit 4 qui s'étend sous une face interne 5 de la paroi 1. En s'approchant de celle-ci, le conduit 4 se divise en branches 6, distinctes ici les unes des autres, puis parallèles et à section d'abord diminuant, puis uniforme, avant d'atteindre la paroi 1 et l'embouchure 2, et les branches 6 se raccordent à l'embouchure 2, et communiquent à l'extérieur par autant d'ouvertures 7 de l'embouchure 2, qui traversent la paroi 1. Leur disposition est mieux visible à la figure 3. Les ouvertures 7 sont parallèles entre elles, se succèdent dans une direction transversale T (souvent la direction angulaire du moteur), et leur forme est oblongue, leur plus grande dimension étant dans une direction longitudinale ou d'allongement principal X, perpendiculaire à la précédente sur la paroi 1 (souvent la direction axiale du moteur). La longueur des ouvertures 7 et donc de l'embouchure 2 dans la direction X peut être comprise entre 100 mm et 450 mm ; la largeur des ouvertures 7 dans la direction T peut être comprise entre 5 mm et 30 mm ; celle de l'embouchure 2 entre 250 mm et 600 mm ; et la surface totale de l'embouchure 2 peut varier entre 0,01 m² et 0,25 m² environ. Il n'existe toutefois pas de véritable limite dimensionnelle à l'application de l'invention. Et les ouvertures 7 sont séparées par des lamelles 8 de la paroi 1 dont la largeur peut être comprise entre 0,5 fois et 3 fois la largeur des ouvertures 7, préférentiellement 1,0 fois.

Le gaz chaud, souvent de l'air, qui est éjecté par le circuit 3 est donc divisé en filets chauds 9 qui empruntent respectivement les branches 6. Leur direction peut être d'abord en direction de hauteur R (perpendiculaire aux deux précédentes X et L, et coïncidant souvent avec la direction radiale du moteur) en s'élevant au-dessous de la face externe 12, opposée à la face interne 5, de la paroi 1, avant de s'infléchir et de prendre une composante de mouvement dans la direction longitudinale X sous l'effet d'un écoulement 10 extérieur tangent à la paroi 1 (souvent dirigé vers l'aval du moteur) d'un gaz frais (souvent de l'air ambiant). Mais l'écoulement 10 se divise en filets frais 11, passant autour des ouvertures 7 et sur les lamelles 8, en passant sur l'embouchure 2, avec un débit important qui reste tangent à la paroi 1. Ce débit de gaz frais contrecarre le retour des filets chauds 9 sur la face externe 12 de la paroi 1 et la protège d'échauffements excessifs. De plus, la division des écoulements chauds et frais en filets entremêlés 9 et 11 favorise leur mélange plus rapide et donc la suppression des zones chaudes à l'extérieur de l'embouchure 2.

Une caractéristique de l'invention est représentée à la figure 4 et illustre un bec 15 du côté aval ou côté de fuite de fuite de l'écoulement 10, à chacune des ouvertures 7. Il s'agit d'un relief saillant dans la direction de hauteur R comme les murets précédents, saillant aussi vers l'aval et s'évasant dans les deux sens de la direction transversale T. Ces becs 15 canalisent partiellement les filets chauds 9 à la sortie des ouvertures 7, en favorisant leur éloignement de la paroi 1, leur étalement dans la direction transversale T et leur mélange avec les filets frais 11. Ils peuvent être établis directement sur la face externe 12 de la paroi 1, ou sur les murets 13 ou 14.

Cette conception peut être complétée de diverses manières avec l'espoir de la perfectionner.

La figure 5 représente un aménagement possible, dans lequel les ouvertures 7 ne s'étendent pas au niveau de la face externe 12 mais un peu au-dessus de celles-ci, les branches 6 du circuit étant prolongées par des murets 13 saillant sur la face externe 12 et qui entourent les ouvertures 7. Leur hauteur peut être comprise entre 5 mm et 30 mm. Avec une telle disposition, les filets chauds 9 sortent du circuit d'échange de chaleur 3 à distance de la paroi 1 par un bord supérieur 20 des murets 13, ce qui favorise le maintien des filets d'air frais 11 entre les ouvertures 7.

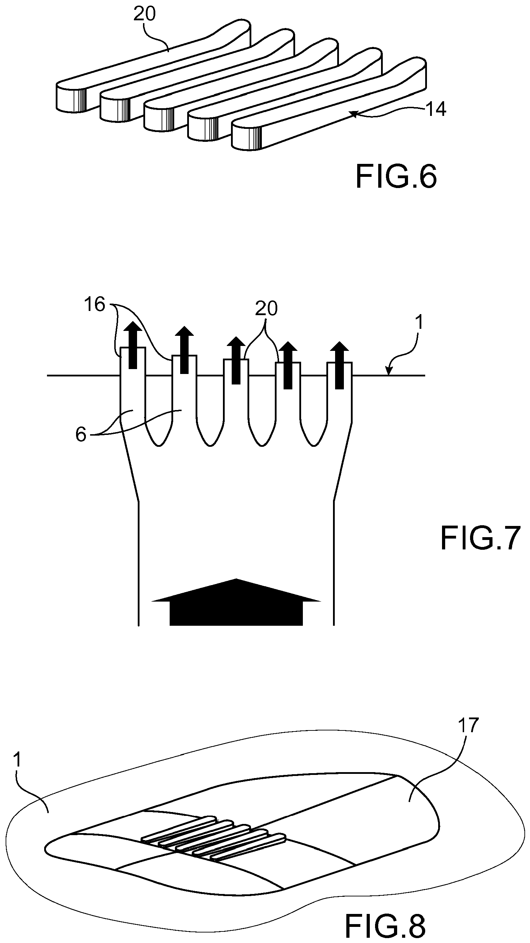

Dans la représentation de la figure 5, les murets 13 sont de hauteur constante. Cette disposition n'est pas nécessaire et on peut envisager des murets 14 (figure 6) dont la hauteur est variable dans la direction d'allongement principal des ouvertures 7 (la direction longitudinale X) et donc des bords supérieurs 20 inclinés dans cette direction. Si cette hauteur diminue dans le sens aval de l'écoulement 10, l'évacuation du gaz chaud peut être facilitée, en admettant toutefois une moins grande distance entre les filets chauds 9 et la face externe 12 ; si au contraire la hauteur du muret est croissante dans le sens aval, l'éjection est plus difficile, mais les filets chauds 9 restent au contraire plus éloignés de la paroi 1, ce qui peut aussi être avantageux. Les becs 15, caractéristiques de l'invention, sont placés sur le bord supérieur 20 des murets 13 ou 14, quand ces derniers sont présents. Ils sont encore présents, quoique pas représentés, dans les réalisations des figures suivantes.

Une conception un peu différente est représentée à la figure 7 : les murets, référencés alors par 16, ont des hauteurs différentes les unes des autres, ce qui peut être envisagé pour des circuits d'échange de chaleur 3 où l'échauffement du gaz est hétérogène, les murets 16 les plus hauts étant alors placés au bout des branches 6 par lesquels passent les filets 9 les plus chauds, qu'il convient d'éloigner davantage de la paroi 1. Il n'existe pas de règle impérative pour la répartition des hauteurs des murets 16.

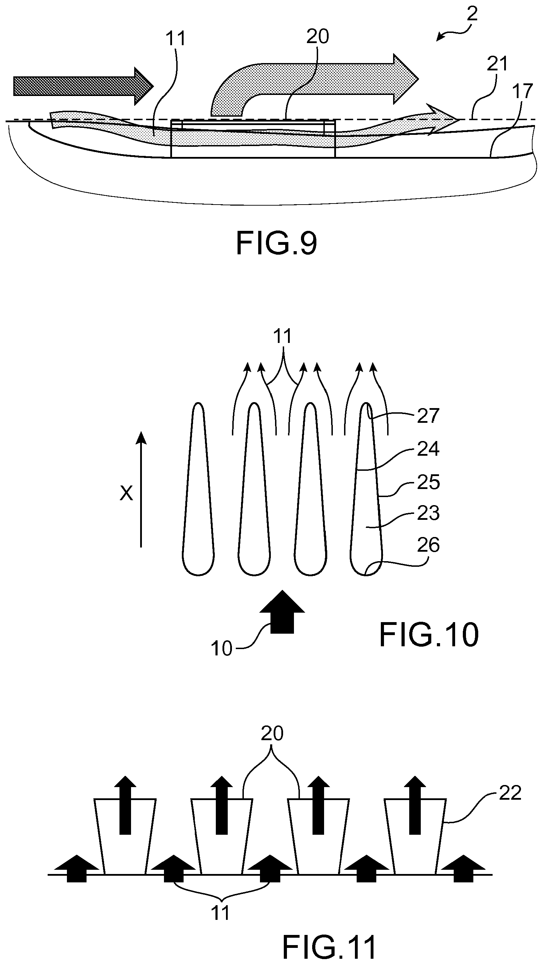

Un inconvénient de ces murets extérieurs est de créer une traînée supplémentaire. Il est possible de la réduire en disposant l'embouchure 2 dans une dépression ou empochement 17 de la paroi 1 (figures 8 et 9) de manière que le bord 20 des murets ne soit pas en saillie, ou soit en saillie moindre, de la partie principale 21 de la paroi 1 autour de l'empochement 17. La pression extérieure infléchit les filets frais 11 dans l'empochement 17 et maintient donc les caractéristiques et effets des autres modes de réalisation. Cette disposition est avantageuse pour les murets envisagés jusqu'à présent, ou les structures en relief extérieures de tout genre. Les becs 15 peuvent aussi s'étendre sous la partie principale 21.

Les murets précédents avaient une section longitudinale de forme régulière. Cette condition non plus n'est pas nécessaire, et on peut envisager des murets 22 (figure 11) s'évasant dans la direction transversale T vers le bord supérieur 20, ce qui facilite encore la formation des filets frais 11 et leur maintien sur la paroi 1.

Une variante de réalisation, représentée à la figure10, consiste à pourvoir les ouvertures, maintenant référencées par 23, de sections s'amincissant vers l'aval de l'écoulement 10; cette disposition permet de limiter l'impact des murets sur le flux 11 d'air frais et de favoriser la reformation de la couche d'air frais en aval de l'embouchure.

L'invention peut être mise en oeuvre de bien d'autres façons différentes. Les ouvertures 7 et 23 représentées jusqu'ici étaient délimitées par des côtés latéraux 24 et 25 (référencés à la figure 11), parallèles ou obliques à la direction longitudinale X, rectilignes, et, aux extrémités, par un bord d'attaque 26 et un bord de fuite 27 en amont et en aval raccordant les deux côtés latéraux 24 et 25, tous deux arrondis; ces caractéristiques ne sont toutefois pas indispensables non plus. Les formes et sections des ouvertures 7 et 23 pourraient aussi être différentes les unes des autres.

## Revendications

1. Agencement d'un conduit (3) de gaz chaud de moteur d'aéronef, le conduit s'étendant sous une face dite interne (5) d'une paroi (1) du moteur, opposée à une face dite externe (12) de la paroi, le conduit (3) comprenant une embouchure (2) qui lui est raccordée, consistant en une pluralité d'ouvertures (7) oblongues et distinctes traversant la paroi (1), ayant une direction d'allongement principal (X) coïncidant sensiblement avec une direction d'un écoulement (10) de gaz frais sur la face externe (12) pendant un fonctionnement ordinaire du moteur, les ouvertures se succédant dans une direction transversale (T) de la paroi (1) qui est perpendiculaire à la direction d'allongement principal (X), **caractérisé en ce que** les ouvertures sont munies de becs (15) s'évasant dans la direction transversale, et s'étendant au-delà d'une extrémité des ouvertures (7) dans ledit sens aval.

2. Agencement selon la revendication 1, **caractérisé en ce que** les ouvertures sont entourées et délimitées par des murets (13, 14, 16, 22) établis sur la face externe de la paroi et s'élevant au-dessus de la face externe dans une direction radiale (R), les becs étant placés sur un bord supérieur (20) des murets.

3. Agencement selon la revendication 2, **caractérisé en ce que** les murets (16) ont des hauteurs différentes au-dessus de la face externe (12) pour chacune des ouvertures.

4. Agencement selon l'une quelconque des revendications 1 à 3, **caractérisé en ce que** la face externe de la paroi est en dépression (17) incurvée autour des ouvertures (7).

5. Agencement selon l'une quelconque des revendications 1 à 4, **caractérisé en ce que** les ouvertures (23) s'amincissent progressivement le long de la direction longitudinale.

6. Agencement selon l'une quelconque des revendications 1 à 5, **caractérisé en ce que** les ouvertures sont séparées de distances plus grandes que leurs largeurs dans la direction transversale.

7. Agencement selon l'une quelconque des revendications 1 à 6, **caractérisé en ce que** le conduit se divise en branches (6) distinctes se raccordant respectivement aux ouvertures avant d'atteindre l'embouchure (2).

## Patentansprüche

1. Anordnung eines Heißgasrohrs (3) eines Flugzeugtriebwerks, wobei sich das Rohr unter einer sogenannten Innenseite (5) einer Wand (1) des Triebwerks gegenüber einer sogenannten Außenseite (12) der Wand erstreckt, wobei das Rohr (3) einen Auslass (2) aufweist, der mit diesem verbunden ist, bestehend aus einer Mehrzahl von durch die Wand (1) verlaufenden, länglichen und getrennten Öffnungen (7) mit einer Hauptlängsrichtung (X) die im Wesentlichen mit einer Richtung einer Strömung (10) von Frischgas auf der Außenseite (12) während eines normalen Triebwerksbetriebs zusammenfällt, wobei die Öffnungen in einer Querrichtung (T) der Wand (1) aufeinander folgen, welche senkrecht zur Hauptlängsrichtung (X) verläuft, **dadurch gekennzeichnet, dass** die Öffnungen mit Düsen (15) versehen sind, die sich in der Querrichtung aufweiten und sich über ein Ende der Öffnungen (7) hinaus in die stromabwärtige Richtung erstrecken.

2. Anordnung nach Anspruch 1, **dadurch gekennzeichnet, dass** die Öffnungen von Wandteilen (13, 14, 16, 22) umgeben und begrenzt sind, die sich an der Außenfläche der Wand befinden und sich über die Außenfläche in einer radialen Richtung erheben, wobei die Düsen auf einem oberen Rand (20) der Wandteile platziert sind.

3. Anordnung nach Anspruch 2, **dadurch gekennzeichnet, dass** die Wandteile (16) für jede der Öffnungen oberhalb der Außenfläche (12) unterschiedliche Höhen aufweisen.

4. Anordnung nach einem der Ansprüche 1 bis 3, **dadurch gekennzeichnet, dass** die Außenfläche der Wand in einer Vertiefung (17) um die Öffnungen (7) herum gebogen ist.

5. Anordnung nach einem der Ansprüche 1 bis 4, **dadurch gekennzeichnet, dass** sich die Öffnungen (23) entlang der Längsrichtung zunehmend verjüngen.

6. Anordnung nach einem der Ansprüche 1 bis 5, **dadurch gekennzeichnet, dass** die Öffnungen in der Querrichtung durch Abstände voneinander getrennt sind, die größer als ihre Breiten sind.

7. Anordnung nach einem der Ansprüche 1 bis 6, **dadurch gekennzeichnet, dass** sich das Rohr in getrennte Abzweigungen (6) teilt, die jeweils an die Öffnungen angeschlossen werden, bevor sie den Auslass (2) erreichen.

## Claims

1. A layout of a hot-gas pipe (3) of an aircraft engine, the pipe extending under a face called inner face (5) of an engine wall (1), opposite to a face called outer face (12) of the wall, the pipe (3) comprising an outlet (2) to which it is connected, consisting of a plurality of oblong and distinct openings (7) passing through the wall (1), having a direction of main elongation (X) substantially coinciding with a direction of a flow (10) of cool gas over the outer face (12) during ordinary engine operation, the openings succeeding each other in a transverse direction (T) of the wall (1) which is perpendicular to the direction of main elongation (X) **characterised in that** the openings are provided with slats (15) flaring in the transverse direction, and extending beyond one end of the openings (7) in said downstream direction.

2. The layout according to claim 1, **characterised in that** the openings are surrounded and delimited by low walls (13, 14, 16, 22) established on the outer face of the wall and rising above the outer face in a radial direction (R), the slats being placed on an upper edge (20) of the low walls.

3. The layout according to claim 2, **characterised in that** the low walls (16) have different heights above the outer face (12) for each of the openings.

4. The layout according to any one of claims 1 to 3, **characterised in that** the outer face of the wall is in depression (17) curved around the openings (7).

5. The layout according to any one of claims 1 to 4, **characterised in that** the openings (23) gradually taper along the longitudinal direction.

6. The layout according to any one of claims 1 to 5, **characterised in that** the openings are separated by distances greater than their widths in the transverse direction.

7. The layout according to any one of claims 1 to 6, **characterised in that** the pipe is divided into distinct branches (6) respectively connected to the openings before reaching the outlet (2).
